# FASCICULE DE BREVET EUROPEEN

(11) **EP 4 207 487 B1**
(45) Date de publication et mention de la délivrance du brevet: **31.07.2024**
(21) Numéro de dépôt: 23150185.9
(22) Date de dépôt: 03.01.2023
(51) Int. Cl.: H01Q 1/22, B64D 47/04, H01Q 1/28, B64D 47/02, B64F 1/36, H01Q 9/04, H01Q 1/42

(54) **PROCÉDÉ D'ÉQUIPEMENT D'UN AÉRONEF EN MOYENS DE COMMUNICATION RADIO**
VERFAHREN ZUM AUSSTATTEN EINES FLUGZEUGS MIT FUNKKOMMUNIKATIONSMITTELN
METHOD FOR FITTING AN AIRCRAFT WITH RADIO COMMUNICATION MEANS

(30) Priorité: 04.01.2022 FR 2200046
(43) Date de publication de la demande: 05.07.2023
(73) Titulaire: Globalsys, 94380 Bonneuil sur Marne (FR)
(72) Inventeur: RETALI, Dominique, 94500 Champigny-Sur-Marne (FR)
(74) Mandataire: Cabinet Boettcher

(56) Documents cités:
- DE-A1- 102011 089 421
- FR-A1- 2 874 277
- US-A- 5 446 470
- US-A1- 2007 008 234
- US-A1- 2008 158 045

## Description

### ARRIERE PLAN DE L'INVENTION

Il existe un besoin d'établir une communication entre les pilotes d'un aéronef et le personnel au sol lors de son arrivée ou de son départ de l'aérogare. Ces communications permettent de coordonner l'activité des pilotes et du personnel au sol (récupération ou chargement des bagages, déplacement de l'aéronef à l'aide d'un tracteur...) . Traditionnellement, l'agent de piste qui souhaite établir une communication avec l'aéronef est équipé d'un casque et branche le câble associé directement sur un connecteur porté par boîtier disposé sur l'atterrisseur de l'aéronef. Pour faciliter l'établissement de ces communications, on a proposé d'établir une communication radio entre l'agent de piste et l'aéronef. A cet effet, on a proposé de munir l'aéronef d'une antenne dédiée permettant d'établir une communication radio entre l'aéronef et l'agent de piste. Il est alors souhaitable de disposer sur l'aéronef d'une antenne ayant la capacité de diffuser le signal radio de manière adéquate en vue d'en maximiser la portée. De plus il est souhaitable que ces émissions soient dirigées vers l'avant de l'aéronef afin de permettre la communication avec un agent de piste situé dans la zone avant, notamment pendant les phases d'arrivée de l'avion en direction du terminal aéroportuaire. Cette antenne pourra avantageusement trouver d'autres emplois, comme l'échange de données avec des équipements aéroportuaires de guidage de l'aéronef vers sa place de parking, ou avec un engin de tractage de l'aéronef, et plus généralement tout équipement ou engin aéroportuaire.

Cependant, sur des aéronefs déjà construits, l'implantation d'une telle antenne est problématique. Si l'on souhaite implanter l'antenne sur le fuselage, cela implique des travaux de reprise ou de modification du fuselage, éventuellement avec implantation de renforts structuraux qui sont coûteux et nécessitent une démarche de certification auprès des autorités de certification. Il peut également être envisagé d'implémenter l'antenne sur l'un des atterrisseurs de l'aéronef. Cette implémentation nécessite la provision de supports adaptés, et, de nouveau, demande une certification.

Le document FR 2 874 277 concerne un procédé d'alerte de niveau d'énergie faible dans un système de communication comportant un premier boîtier adapté à être embarqué sur un véhicule pour être relié à un organe de communication du véhicule et apte à établir une communication radio avec un deuxième boîtier.

Le document US 2007/008234 concerne une antenne directionnelle pour transmettre et recevoir des ondes radio électromagnétiques.

Le document US 5 446 470 concerne également une antenne réalisée en plaçant des éléments rayonnants dans au moins un des espaces occupés par les différents feux extérieurs du véhicule.

Le document DE 10 2011 089421 concerne une unité lumineuse comportant un capteur radar qui est disposé derrière un couvercle partiellement transparent de l'unité lumineuse. Le document US 2008/158045 concerne une lampe pour véhicule comprenant une unité de lampe disposée à l'intérieur d'une chambre de lampe de sorte que la direction de l'axe optique de l'unité de lampe soit réglable à l'aide d'un mécanisme de réglage de mouvement d'inclinaison.

### OBJET DE L'INVENTION

L'invention vise à proposer l'installation facilitée sur l'aéronef d'une antenne, notamment pour communication avec le personnel au sol, un équipement ou un engin aéroportuaire.

### RESUME DE L'INVENTION

En vue de la réalisation de ce but, on propose un procédé d'équipement d'un aéronef en moyens de communication radio avec des agents de piste, un équipement ou un engin aéroportuaire, comportant l'étape de remplacer un phare existant de l'aéronef par un phare comportant une antenne pour l'établissement d'une communication radio entre l'aéronef et un agent de piste, un équipement ou un engin aéroportuaire, ainsi que des moyens de connexion d'un câble de transmission pour mettre en liaison l'antenne et des moyens de communication radio de l'aéronef; et comportant l'étape de disposer un câble de transmission entre le phare et les moyens de communication radio de l'aéronef.

Par phare, on entend ici tout dispositif adapté à émettre de la lumière pour éclairer l'environnement de l'aéronef au sol et rapporté sur un aéronef, en particulier sur un atterrisseur ou une trappe de la soute dans laquelle l'atterrisseur se rétracte. Il peut par exemple s'agir d'un phare d'atterrissage ou d'un phare de roulage. De tels phares sont généralement rapportés sur les atterrisseurs de l'aéronef, mais peuvent également être montés sur les trappes des soutes des atterrisseurs, voire dans la voilure.

La disposition de l'antenne sur le phare permet l'équipement d'un aéronef avec une antenne sans avoir à prévoir de modifications structurelles du fuselage ou de l'atterrisseur. Il suffit alors de prévoir dans le faisceau électrique d'alimentation du phare un câble de transmission entre l'antenne et les moyens de radio-communication de l'aéronef.

Selon une disposition préférée, le phare comporte un capot fermé par une glace de protection délimitant une cavité renfermant la source lumineuse, l'antenne étant disposée à l'intérieur du capot dans la même cavité que la source lumineuse. Ainsi, l'antenne est naturellement protégée des chocs et d'un environnement potentiellement défavorable (vent relatif, intempéries...).

Selon une variante de l'invention, le phare comporte des moyens de modulation/démodulation directement connectés à l'antenne. Ainsi, le signal radio est généré au plus près de l'antenne.

### BREVE DESCRIPTION DES DESSINS

La figure 1 est une vue en perspective d'un aéronef dont l'atterrisseur porte un phare, un agent de piste de trouvant à proximité de l'atterrisseur
La figure 2 est une vue en perspective d'un atterrisseur avant d'aéronef portant un phare.
La figure 3 est une vue en perspective d'un phare permettant la mise en oeuvre de l'invention.
La figure 4 est une vue en perspective d'un phare selon une variante de l'invention.

### DESCRIPTION DETAILLEE DE L'INVENTION

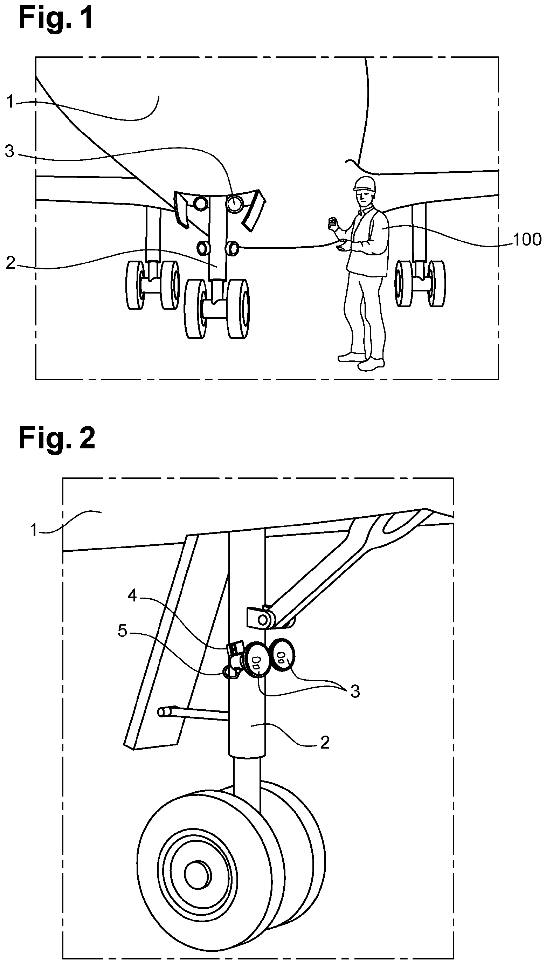

En référence à la figure 1, l'aéronef 1 illustré comporte un atterrisseur avant 2 s'étendant sous l'avant du fuselage. L'atterrisseur 2 porte ici plusieurs phares, dont un phare 3 servant à éclairer l'avant de l'aéronef, notamment lors des phases d'atterrissage et de décollage. Comme cela est visible à la figure 2, le phare 3 est ici fixé par des vis à un support 4 de l'atterrisseur 2, tandis qu'un câble d'alimentation 5 descend du fuselage de l'aéronef le long de l'atterrisseur 2 jusqu'au phare 3.

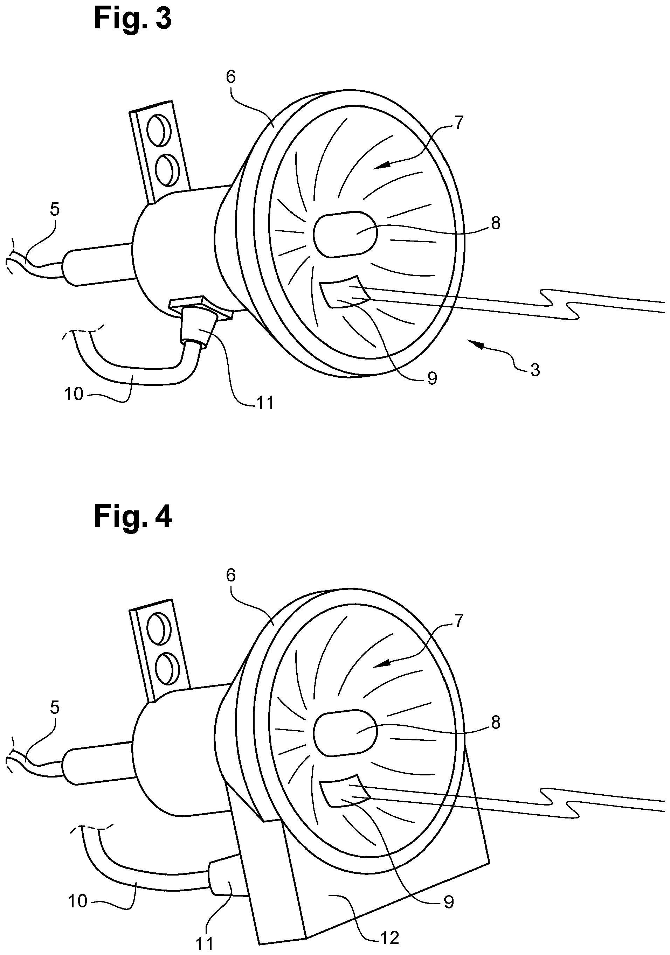

Comme cela est visible à la figure 3, le phare 3 comporte un capot 6 fermé par une glace de protection 7 délimitant une cavité renfermant une source lumineuse 8 alimentée par le câble d'alimentation 5, par exemple ici une ampoule. L'invention vise ici à faciliter la communication entre l'équipage de l'aéronef 1 et un agent de piste 100 par l'établissement d'une communication radio.

A cet effet, et selon l'invention, on dispose dans le phare 3 une antenne, ici une antenne plate 9 de type « patch » placée à l'intérieur du capot 6 sur la face interne de celui-ci, donc dans la même cavité que la source lumineuse 8, pour rayonner et capter principalement vers l'avant de l'aéronef au travers de la glace de protection 7. L'antenne 9 est ainsi protégée des intempéries et de tout choc. Le phare 3 comporte un connecteur 11 pour connecter l'antenne 9 aux moyens de communication radio de l'aéronef au moyen d'un câble de transmission 10 qui descend le long de l'atterrisseur, parallèlement au câble d'alimentation 5 de la source lumineuse 8.

L'antenne 9 permet d'établir une communication radio avec un émetteur/récepteur porté par l'agent de piste 100 (par exemple implanté dans son casque), qui peut dès lors dialoguer avec le personnel de bord de l'aéronef. La communication radio peut par exemple s'opérer sur des fréquences libres de droit et de faible portée, de type WIFI, DECT... ou encore tout autre protocole de communication radio. A cet effet, le câble de transmission 10 transmet un signal radio entre l'antenne 9 et les moyens de communication radio de l'aéronef. Le câble de transmission 10 est de préférence blindé pour éviter toute radiation parasite.

Selon une variante illustrée à la figure 4, le phare 3 est équipé d'un boîtier de modulation/démodulation 12 directement connecté à l'antenne 9, le câble de transmission 10 mettant en communication ledit boîtier de modulation/démodulation 12 avec les moyens de communication radio de l'aéronef. Le câble de transmission 10 ne transmet alors qu'un signal électrique non modulé.

L'invention est particulièrement adaptée pour le retrofit d'aéronefs existants. En effet, pour permettre des liaisons radio entre le personnel de piste et l'aéronef ou encore la communication de données entre l'aéronef et une infrastructure ou un engin aéroportuaire, il suffit remplacer un phare existant de l'aéronef par un phare selon l'invention qui vient se fixer sur le même support que le phare existant, et de faire descendre un câble de transmission depuis les moyens de communication radio de l'aéronef vers le phare. Ce retrofit se fait sans aucune modification structurelle du fuselage ou de l'atterrisseur et ne nécessite donc pas de requalification structurelle. Avantageusement, on prévoira sur le phare de l'invention les mêmes interfaces que les phares existants. L'invention n'est pas limitée à ce qui vient d'être décrit, mais englobe au contraire toute variante entrant dans le cadre défini par les revendications. En particulier, bien qu'ici la source lumineuse du phare soit une ampoule, la source de lumière pourra être de toute autre nature, comme par exemple une ou plusieurs LEDs.

Bien qu'ici, l'invention ait été mise en oeuvre pour assurer une communication radio entre l'aéronef et un agent de piste, l'invention pourra être mise en oeuvre pour assurer une communication de données pour les opérations aéroportuaires entre l'aéronef et un équipement ou un engin aéroportuaire.

Bien qu'ici le phare de l'invention soit de préférence disposé sur l'atterrisseur avant de l'aéronef, il pourra également être disposé sur un autre atterrisseur, sur une trappe de la soute dans laquelle l'atterrisseur se rétracte en vol, ou encore sur la structure du fuselage ou de la voilure.

Bien qu'ici l'antenne soit de type patch, qui peut être très facilement intégrée dans un phare, l'antenne pourra être de tout autre type.

Bien qu'ici l'antenne soit intégrée dans la cavité délimitée par le capot et la glace de protection, l'invention s'applique également à d'autres types de phares qui n'auraient pas de glace de protection, la source lumineuse étant alors directement exposée aux intempéries. Bien qu'ici , le câble de transmission 10 ait été illustré physiquement séparé du câble d'alimentation 5, les deux câbles descendant le long de l'atterrisseur selon des cheminements séparés pour faciliter la compréhension de l'invention, le câble de transmission 10 pourra bien entendu être intégré avec le câble d'alimentation 5 dans un faisceau de câbles commun descendant le long de l'atterrisseur, le câble de transmission 10 et le câble d'alimentation 5 pouvant alors partager un connecteur commun pour leur connexion au phare de l'invention.

## Revendications

1. Procédé d'équipement d'un aéronef en moyens de communication radio avec des agents de piste, un équipement ou un engin aéroportuaire, comportant l'étape de remplacer un phare (3) existant de l'aéronef par un phare comportant une antenne (9) pour l'établissement d'une communication radio entre l'aéronef et un agent de piste (100), un équipement ou un engin aéroportuaire, ainsi que des moyens de connexion (11) d'un câble de transmission pour mettre en liaison l'antenne (9) et des moyens de communication radio de l'aéronef ; et comportant l'étape de disposer un câble de transmission (10) entre le phare et les moyens de communication radio de l'aéronef.

2. Procédé selon la revendication 1, dans lequel le phare de remplacement comporte un capot (6) fermé par une glace de protection (7) délimitant avec le capot une cavité renfermant la source lumineuse (8), l'antenne (9) étant disposée à l'intérieur du capot dans la même cavité que la source lumineuse.

3. Procédé selon la revendication 1, dans lequel l'antenne (9) du phare de remplacement est une antenne plate, de type « patch ».

4. Procédé selon la revendication 1, dans lequel le phare de remplacement comporte des moyens de modulation/démodulation (11) directement reliés à l'antenne.

5. Aéronef comportant des moyens de communication radio entre l'aéronef et un agent de piste (100), un équipement ou un engin aéroportuaire, et un phare comportant une antenne (9) pour l'établissement d'une communication radio entre l'aéronef et un agent de piste (100), un équipement ou un engin aéroportuaire ainsi que des moyens de connexion (11) d'un câble de transmission pour mettre en liaison l'antenne (9) et des moyens de communication radio de l'aéronef, un câble de transmission (10) étant disposé entre le phare et les moyens de communication radio de l'aéronef.

## Patentansprüche

1. Verfahren zur Ausrüstung eines Luftfahrzeugs mit Funkverbindungseinrichtungen mit Ramp Agents, einer Ausrüstung oder einem Flughafengerät, das den Schritt des Ersetzens eines existierenden Scheinwerfers (3) des Luftfahrzeugs durch einen Scheinwerfer aufweist, der eine Antenne (9) für den Aufbau einer Funkverbindung zwischen dem Luftfahrzeug und einem Ramp Agent (100), einer Ausrüstung oder einem Flughafengerät sowie Anschlusseinrichtungen (11) eines Übertragungskabels aufweist, um die Antenne (9) und Funkverbindungseinrichtungen des Luftfahrzeugs in Verbindung zu bringen; und den Schritt aufweist, ein Übertragungskabel (10) zwischen dem Scheinwerfer und den Funkverbindungseinrichtungen des Luftfahrzeugs anzuordnen.

2. Verfahren nach Anspruch 1, wobei der Ersatzscheinwerfer eine Kappe (6) aufweist, die von einer Schutzscheibe (7) verschlossen wird, die mit der Kappe einen Hohlraum begrenzt, der die Lichtquelle (8) umschließt, wobei die Antenne (9) in der Kappe im gleichen Hohlraum angeordnet ist wie die Lichtquelle.

3. Verfahren nach Anspruch 1, wobei die Antenne (9) des Ersatzscheinwerfers eine Flachantenne vom Typ "Patch" ist.

4. Verfahren nach Anspruch 1, wobei der Ersatzscheinwerfer direkt mit der Antenne verbundene Modulations-/Demodulationseinrichtungen (11) aufweist.

5. Luftfahrzeug, das Funkverbindungseinrichtungen zwischen dem Luftfahrzeug und einem Ramp Agent (100), einer Ausrüstung oder einem Flughafengerät und einen Scheinwerfer aufweist, der eine Antenne (9) für den Aufbau einer Funkverbindung zwischen dem Luftfahrzeug und einem Ramp Agent (100), einer Ausrüstung oder einem Flughafengerät sowie Anschlusseinrichtungen (11) eines Übertragungskabels aufweist, um die Antenne (9) und Funkverbindungseinrichtungen des Luftfahrzeugs in Verbindung zu bringen, wobei ein Übertragungskabel (10) zwischen dem Scheinwerfer und den Funkverbindungseinrichtungen des Luftfahrzeugs angeordnet ist.

## Claims

1. A method of providing an aircraft with radio communication means for communicating with ramp agents, or with airport equipment, or with an airport vehicle, the method comprising the step of replacing an existing light (3) of the aircraft by a replacement light including an antenna (9) for establishing radio communication between the aircraft and a ramp agent (100), or airport equipment, or an airport vehicle, together with connection means (11) for connecting a signal cable to enable the antenna (9) to be linked to radio communication means of the aircraft; and also comprising the step of arranging a signal cable (10) between the light and the radio communication means of the aircraft.

2. A method according to claim 1, wherein the replacement light comprises a cover (6) closed by a protective glass (7) cooperating with the cover to define a cavity containing a light source (8), the antenna (9) being arranged inside the cover in the same cavity as the light source.

3. A method according to claim 1, wherein the antenna (9) of the replacement light is a flat antenna of the "patch" type.

4. A method according to claim 1, wherein the replacement light includes modulator/demodulator means (11) connected directly to the antenna.

5. An aircraft including radio communication means for communicating between the aircraft and a ramp agent (100), or airport equipment, or an airport vehicle, and a light including an antenna (9) for establishing radio communication between the aircraft and a ramp agent (100), or airport equipment, or an airport vehicle, together with connection means (11) for connecting a signal cable for linking the antenna (9) to radio communication means of the aircraft, and a signal cable (10) arranged between the light and the radio communication means of the aircraft.
